# EUROPEAN PATENT APPLICATION

(11) **EP 2 226 645 A1**
(43) Date of publication of application: **08.09.2010**
(21) Application number: 10155634.8
(22) Date of filing: 05.03.2010
(51) Int. Cl.: G01S 5/00, G08G 1/123

(54) **Information notifying apparatus, mobile apparatus, information notifying system, information notifying method, message outputting method, information notification control program and mobile apparatus control program**

(30) Priority: 05.03.2009 JP 2009051517
(71) Applicant: NEC Corporation, Minato-ku Tokyo 108-8001 (JP)
(72) Inventor: Imae, Yuki, Tokyo (JP)
(74) Representative: Betten & Resch

(57) **Abstract**

An information notifying apparatus includes: a first position information obtaining unit obtaining a first position information indicating a first current position of a mobile apparatus from the mobile apparatus; a calculating unit generating notified information corresponding to the first position based on the first position information; and an information transmitting unit transmitting the notified information to the mobile apparatus.

## Description

### INCORPORATION BY REFERENCE

This application is based upon and claims the benefit of priority from Japanese Patent Application No. 2009-051517, filed on March 5, 2009, the disclosure of which is incorporated herein in its entirety by reference.

### TECHNICAL FIELD

The present invention relates to an information notifying apparatus, a mobile apparatus, an information notifying system, an information notifying method, a message outputting method, an information notification control program and a mobile apparatus control program which carry out notification on the basis of received position information.

### BACKGROUND ART

In the case that a mobile object such as a person, a car, a train or the like is approaching a dangerous point, it is desirable generally for the mobile object to be able to sense in advance that the mobile object is approaching the dangerous point.

For example, when a blind person goes out, the person uses often a white cane and a Seeing Eye dog (guide dog) in order to secure safety on the road. However, there is a caused problem that a movement necessary to use a hand, which is used most frequently in the daily life, is restricted when the person uses the white cane and the Seeing Eye dog. Moreover, when the person uses the white cane, the person can get information on an object arranged only within about 1-meter in diameter. It is impossible to expect that the Seeing Eye dog would make a complicated judgment of the situation suitable for its surroundings. Precisely, it is a severe burden for the person to use the white cane and the Seeing Eye dog.

Japanese Patent Application Laid-Open No. 2007-87092 (henceforth, referred to as "**patent document 1**") discloses an art to notify a mobile object that the mobile object is approaching to a predetermined point. A road crossing supporting apparatus described in the **patent document 1** notifies a blind person of approaching to the predetermined point, when the road crossing supporting apparatus receives a signal from a transmitting apparatus held by the person and recognizes that the person enters an area within a predetermined distance from the predetermined point.

Japanese Patent Application Laid-Open No. 1999-241925 (henceforth, referred to as "**patent document 2**") discloses an apparatus which notifies user that the user has entered a predetermined area. According to an action managing system described in the **patent document 2**, a management apparatus detects that a mobile navigation apparatus approaches or enters the predetermined area on the basis of position information transmitted from the mobile navigation apparatus, and notifies the mobile navigation apparatus of approaching or entering the predetermined area.

Japanese Patent Application Laid-Open No. 1999-59419 (henceforth, referred to as "**patent document 3**") discloses an apparatus which detects approach of a train and then, issues an alarm. A train approach alarming apparatus described in the **patent document 3** calculates a distance between the train approach alarming apparatus and the train by use of position information received from the train, and issues the alarm in the case that the distance is not longer than a set value.

### SUMMARY

An exemplary object of the present invention is to provide an information notifying apparatus, an information notifying system, an information notifying method and an information notification control program which can carry out an appropriate notification on the basis of position of the mobile apparatus.

Another exemplary object of the present invention is to provide a mobile apparatus, a message outputting method and a mobile apparatus control program which can output an appropriate message on the basis of a current position of the mobile apparatus.

An information notifying apparatus according to first exemplary aspect of the invention includes: a first position information obtaining unit obtaining a first position information indicating a first current position of a mobile apparatus from the mobile apparatus; a calculating unit generating notified information corresponding to the first position based on the first position information; and an information transmitting unit transmitting the notified information to the mobile apparatus.

A mobile apparatus according to second exemplary aspect of the invention includes: a first position information obtaining unit obtaining a first position information indicating a first current position; a position information transmitting unit transmitting the first position information to an external apparatus; a notified information receiving unit receiving notified information generated by the external apparatus based on the first position information; and a message outputting unit outputting a predetermined message based on the received notified information.

An information notifying system according to third exemplary aspect of the invention includes: a mobile apparatus comprising: a first position information obtaining unit obtaining a first position information indicating a first current position; a position information transmitting unit transmitting a first position information indicating a current position of the mobile apparatus; a notified information receiving unit receiving notified information; and a message outputting unit outputting a predetermined message based on the notified information; and an information notifying apparatus comprising: a first position information receiving unit receiving the first position information; a calculating unit generating the notified information corresponding to the first position based on the first position information; and an information transmitting unit transmitting the notified information.

An information notifying method according to fourth exemplary aspect of the invention comprising: obtaining a first position information indicating a first current position of a mobile apparatus from the mobile apparatus; generating notified information corresponding to the first position based on the first position information; and transmitting the notified information to the mobile apparatus.

A message outputting method according to fifth exemplary aspect of the invention includes: obtaining a first position information indicating a first current position; transmitting the first position information to an external apparatus; receiving notified information generated by the external apparatus based on the first position information; and outputting a predetermined message based on the received notified information.

An information notification control program according to sixth exemplary aspect of the invention adopted in an information notifying apparatus which includes a first position information obtaining unit, a calculating unit and an information transmitting unit, for controlling the operations of: obtaining a first position information indicating a first current position of a mobile apparatus from the mobile apparatus with the first position information obtaining unit; generating notified information corresponding to the first position based on the first position information with the calculating unit; and transmitting the notified information to the mobile apparatus with the information transmitting unit.

A message output control program according to seventh exemplary aspect of the invention adopted in a mobile apparatus which includes a first position information obtaining unit, a position information transmitting unit, a notified information receiving unit and a message outputting unit, for controlling the operations of: obtaining a first position information indicating a first current position with the first position information obtaining unit; transmitting the first position information to an external apparatus with the position information transmitting unit; receiving notified information generated by the external apparatus based on the first position information received by the external apparatus with the notified information receiving unit; and outputting a predetermined message based on the received notified information with the message outputting unit.

### BRIEF DESCRIPTION OF THE DRAWINGS

Exemplary features and advantages of the present invention will become apparent from the following detailed description when taken with the accompanying drawings in which:
**Fig. 1** is a block diagram showing a configuration of an information notifying system according to a first exemplary embodiment of the present invention;
**Fig. 2** is a block diagram showing a configuration of a mobile terminal according to the first exemplary embodiment of the present invention;
**Fig. 3** is a block diagram showing a configuration of an information notifying apparatus according to the first exemplary embodiment of the present invention;
Fig. 4 is a schematic diagram showing a concept of the first exemplary embodiment of the present invention;
**Fig. 5** is a plan view showing an outline of an operation according to the first exemplary embodiment of the present invention;
**Fig. 6** is a plan view showing an operation of the first exemplary embodiment of the present invention;
**Fig. 7** is a plan view showing a modified example of the operation of the first exemplary embodiment of the present invention;
**Fig. 8** is a flowchart showing a processing of the terminal according to the first exemplary embodiment of the present invention;
**Fig. 9** is a flowchart showing a processing of a calculating unit of the information notifying apparatus according to the first exemplary embodiment of the present invention;
**Fig. 10** is a plan view showing an operation of a second exemplary embodiment of the present invention;
**Fig. 11** is a flowchart showing a processing of a calculating unit of an information notifying apparatus according to the second exemplary embodiment of the present invention;
**Fig. 12** is a plan view showing an operation of a third embodiment of the present invention;
**Fig. 13** is a flowchart showing a processing of a calculating unit of an information notifying apparatus according to the third exemplary embodiment of the present invention;
**Fig. 14** is a plan view showing an operation of a fourth exemplary embodiment of the present invention;
**Fig. 15** is a block diagram showing a configuration of a mobile type information notifying apparatus according to the fourth exemplary embodiment of the present invention;
**Fig. 16** is a plan view showing an operation of a fifth exemplary embodiment of the present invention;
**Fig. 17** is a block diagram showing a configuration of an information notifying system according to a sixth exemplary embodiment of the present invention;
**Fig. 18** is a flowchart showing a processing of a terminal according to the sixth exemplary embodiment of the present invention; and
**Fig. 19** is a flowchart showing a processing of a calculating unit of an information notifying apparatus according to the sixth exemplary embodiment of the present invention.

### EXEMPLARY EMBODIMENT

Exemplary embodiments of the present invention will now be described in detail in accordance with the accompanying drawings.

### 1. First Exemplary Embodiment

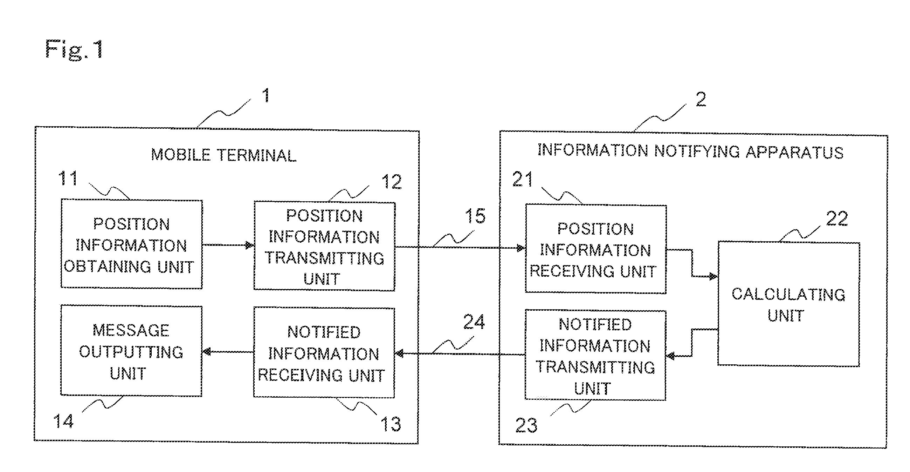

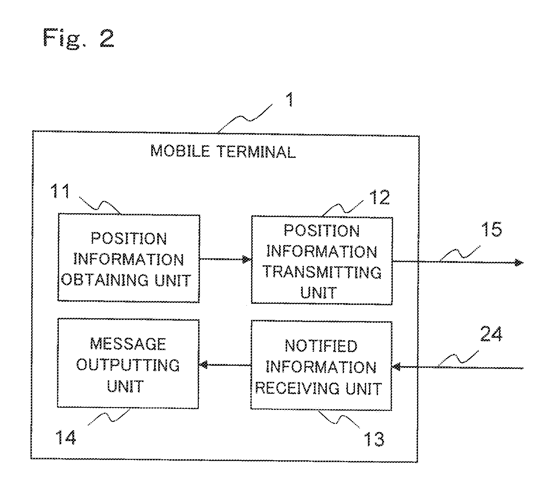

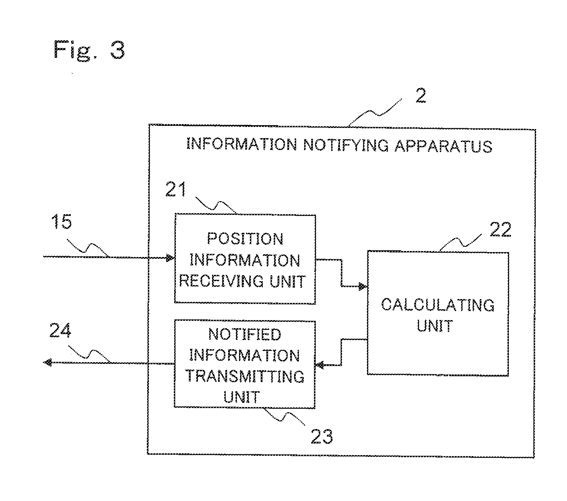

Next, the first exemplary embodiment of the present invention will be described in detail referring a drawing. **Fig. 1** is a block diagram showing a configuration of an information notifying system according to the first exemplary embodiment of the present invention. **Fig. 2** is a block diagram showing a configuration of a mobile terminal according to the first embodiment of the present invention. **Fig. 3** is a block diagram showing a configuration of an information notifying apparatus according to the first exemplary embodiment of the present invention.

The information notifying system according to the first exemplary embodiment of the present invention includes a mobile terminal **1** and an information notifying apparatus **2.** According to the first exemplary embodiment of the present invention, the mobile terminal **1** can move literally, and it is assumed that the information notifying apparatus **2** is arranged fixedly near a predetermined point, for example, a dangerous point. Incidentally, the mobile terminal **1** and the information notifying apparatus **2** according to the first exemplary embodiment of the present invention have only components indispensable to the present invention. The inside configuration and the function of the mobile terminal **1** and the information notifying apparatus **2** will be described respectively in the following.

The mobile terminal **1** includes a position information obtaining unit **11,** a position information transmitting unit **12,** a notified information receiving unit **13** and a message outputting unit **14.**

The position information obtaining unit **11** measures a current position of the mobile terminal **1** and outputs position information (henceforth, referred to as "terminal position information"). There are various kinds of methods to measure the current position. For example, a method which uses widely-spread GPS (Global Positioning System) is exemplified. Since the method for obtaining the position information by use of GPS is wen-known, description on the method is omitted.

There is also a method to obtain the position information by use of a signal transmitted from each of position information transmitting apparatuses which are arranged at a distance fixedly. For example, the method is disclosed in Japanese Patent Application Laid-Open No. 2005-175656. When the mobile terminal **1** exists in an environment, where the mobile terminal **1** cannot receive a radio wave from a satellite, such as in an underground area, the mobile terminal **1** cannot measure the position by use of GPS. In this case, a method to use the signal from the above mentioned position information transmitting apparatus arranged fixedly is applicable. In the case that the method is used, a distance between the position information transmitting apparatuses may be made short in order to improve accuracy and precision of the position information.

"Position information" means predetermined coordinate information, which can specify the position of the mobile terminal **1,** such as a combination of the latitude and the longitude. The position information is not limited to two-dimensional information. Therefore, the position information may be one-dimensional information or three-dimensional information. The dimension of the position information has only to be selected appropriately through taking a range of area, in which the mobile terminal **1** can move, and practical necessity into consideration. According to the first exemplary embodiment of the present invention, it is assumed that the position information is two-dimensional information.

The position information transmitting unit **12** receives the terminal position information from the position information obtaining unit **11** and transmits a position information signal **15** to the information notifying apparatus **2.** Since the mobile terminal **1** has mobility, it is desirable that the position information signal **15** is a radio signal such as a radio wave, light or the like.

In the case that the notified information receiving unit **13** receives a notified information signal **24** from the information notifying apparatus **2,** the notified information receiving unit **13** transfers notified information ,which is included in the notified information signal **24,** to the message outputting unit **14**.

The message outputting unit **14** outputs a predetermined message on the basis of the notified information. An outputted voice, an image display, vibration of the mobile terminal **1** by use of a vibrator or the like are exemplified as an example of the predetermined message.

The information notifying apparatus **2** includes a position information receiving unit **21,** a calculating unit **22** and a notified information transmitting unit **23**. The position information receiving unit **21** receives the position information signal **15** from the mobile terminal **1,** and transfers the terminal position information, which is included in the position information signal **15**, to the calculating unit **22.**

The calculating unit **22** generates the notified information, which will be transmitted to the terminal, on the basis of the terminal position information. The notified information includes a kind of message which will be outputted by the mobile terminal **1,** degree of danger or the like.

Contents of the notified information may be set in advance to the calculating unit **22** in association with the position information, in order to simplify a process which is carried out by the calculating unit **22.** In this case, the calculating unit **22** selects the notified information on the basis of the received terminal position information and then, transmits the selected notified information to the mobile terminal **1**. Necessity of the notification may be set in advance to the calculating unit **22** in association with the position information. In this case, the calculating unit **22** judges necessity of the notification on the basis of the terminal position information, and selects or generates the notified information in the case that it is necessary to carry out the notification. Then, the calculating unit **22** transmits the selected or the generated notified-information to the mobile terminal **1**.

The position information of the information notifying apparatus **2** may be set to the calculating unit **22** in advance. In this case, the calculating unit **22** calculates a distance on the basis of difference between the position information of the information notifying apparatus **2** and the position information of the mobile terminal **1** and then, transmits the notified information which is based on the distance. That is, the calculating unit **22** may select the kind of message or the degree of danger on the basis of the distance, and may transmit the selected kind of message or the selected degree of danger as the notified information.

Or, the notified information may include the distance between the information notifying apparatus **2** and the mobile terminal **1**. In this case, the mobile terminal **1** selects the kind of message or the degree of danger on the basis of the distance and outputs the message.

The notified information transmitting unit **23** transmits the notified information, which is received from the calculating unit **22,** to the mobile terminal **1** as the notified information signal **24.**

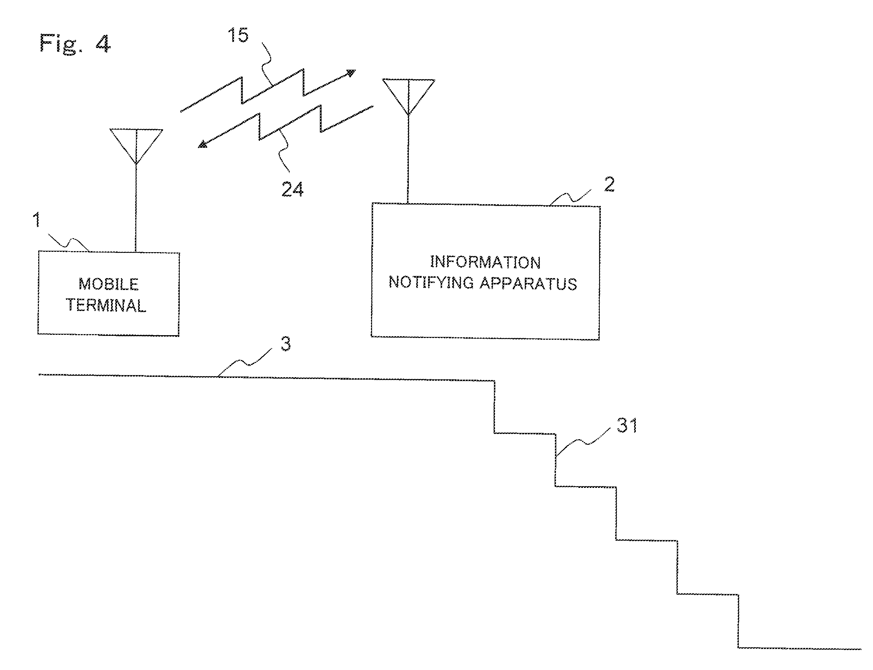

Next, an operation of the information notifying system will be described according to the first exemplary embodiment of the present invention. **Fig. 4** is a schematic diagram showing a concept of the first exemplary embodiment of the present invention.

The mobile terminal **1** transmits the position information signal **15,** which includes the terminal position information indicating the current position of the mobile terminal **1,** to the information notifying apparatus **2.** The information notifying apparatus **2** carries out a predetermined notification to the mobile terminal **1** on the basis of the received terminal position information. According to **Fig. 4****,** an aisle **3** has stairs **31.** When the mobile terminal **1** approaches to the stairs **31,** the information notifying apparatus **2** notifies the mobile terminal **1** that the mobile terminal **1** is approaching to the stairs. A judgment whether the mobile terminal **1** approaches to the stairs **31** is made by the calculating unit **22.** That is, the calculating unit **22** generates the notified information on the basis of the terminal position information. Then, the notified information is transmitted by the notified information transmitting unit **23.**

Or, as mentioned above, the notified information may be transmitted on the basis of the position information of the information notifying apparatus **2** and the position information of the mobile terminal **1.** That is, the information notifying apparatus **2,** which receives the position information of the mobile terminal **1**, calculates the distance between the mobile terminal **1** and the information notifying apparatus **2** on the basis of the position information of the mobile terminal **1** and the position information of the information notifying apparatus **2.** In the case that the calculated distance is shorter than a reference value, the information notifying apparatus **2** transmits the notified information to the mobile terminal **1.** The mobile terminal **1,** which has received the notified information, outputs the predetermined message to user.

In the case that the information notifying apparatus **2** is arranged closely to the stairs **31** as shown in **Fig. 4**, the judgment on the distance may be made on the assumption that the position information of the information notifying apparatus **2** is equivalent to the position information of the stairs **31.** On the other hand, in the case that the information notifying apparatus **2** is arranged apart from the stairs **31,** it is preferable that the position information of the stairs **31** is set to the information notifying apparatus **2.**

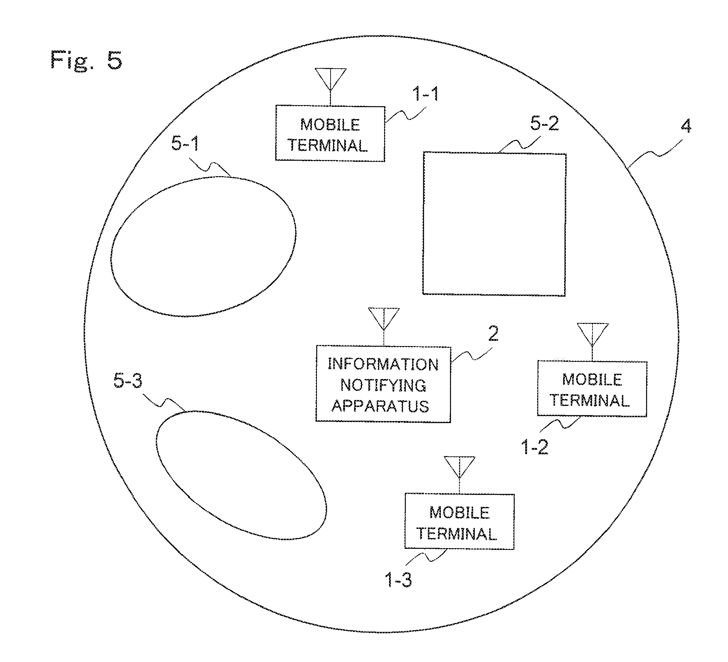

**Fig. 5** is a plan view showing an outline of an operation according to the first exemplary embodiment of the present invention. A notification enabled area **4** means a predetermined area which is determined on the basis of reach of the notified information signal **24.** It is desirable that the position information signal **15**, which is transmitted from the mobile terminal **1**, can reach the information notifying apparatus **2** from any point in the notification enabled area **4.**

However, it is not always necessary that the position information signal **15** has to reach the information notifying apparatus **2** directly from the mobile terminal **1.** Similarly, it is not always necessary that the notified information signal **24** has to reach the mobile terminal **1** directly from the information notifying apparatus **2.** In the case that the position information signal **15** or the notified information signal **24** can not reach the respective destinations directly, the signal may be transferred through a suitable radio communication system. For example, both the mobile terminal **1** and the information notifying apparatus **2** may be terminals which are used in a radio communication system such as a cellular system, a wireless LAN (Local Area Network) or the like. In this case, the signal transferred between the mobile terminal **1** and the information notifying apparatus **2,** that is, the position information signal **15** or the notified information signal **24** can be transferred through a base station. In this case, a wired communication circuit may be used if necessary. Or, the mobile terminal **1** and the information notifying apparatus **2** may work as the terminal and the base station of the radio communication system respectively. In this case, it is possible that the position information signal **15** and the notified information signal **24** are transmitted directly between the mobile terminal **1** and the information notifying apparatus **2.**

The notification enabled area **4** includes notification areas **5-1, 5-2** and **5-3.** Thus, the notification enabled area **4** may include a plurality of notification areas. Furthermore, a shape of the notification area is arbitrary and therefore, any shape and any placement of the notification areas **5-1, 5-2** and **5-3** are applicable. Whatever kind of shape and placement the notification areas **5-1, 5-2** and **5-3** have, the position information itself has only to be set in advance to the calculating unit **22,** or necessity of the notification, and the contents of the notification which is carried out in the case that the notification is necessary have only to be set in advance to the calculating unit **22** in association with the position information or a range of the position information.

In the case that the mobile terminals **1-1**, **1**-**2** and **1-3** move and enter one of the notification areas **5-1, 5-2** and **5-3,** the information notifying apparatus **2** notifies the entering mobile terminal of entering the notification area. The notified information has only to include identification information of the mobile terminal, in order to specify the mobile terminal to which the notification information should be transmitted.

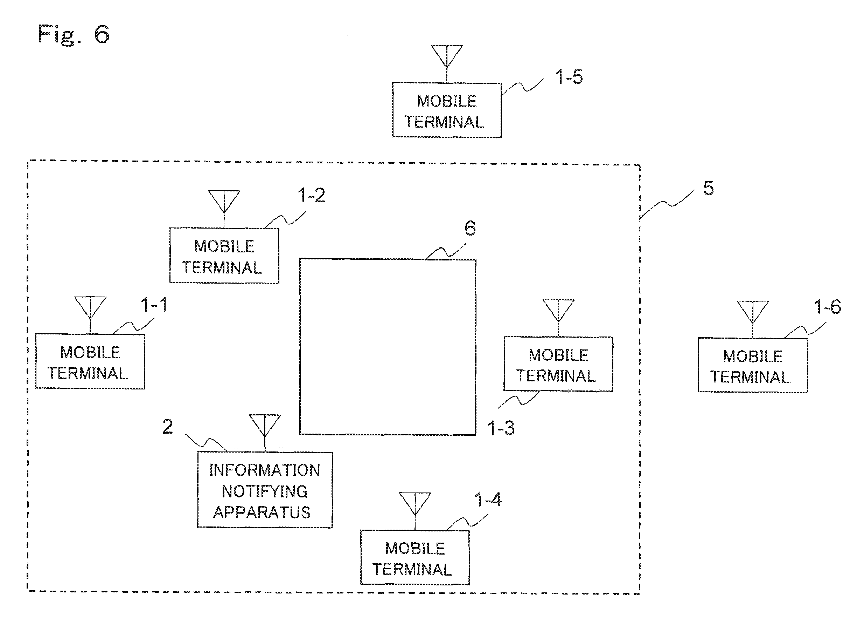

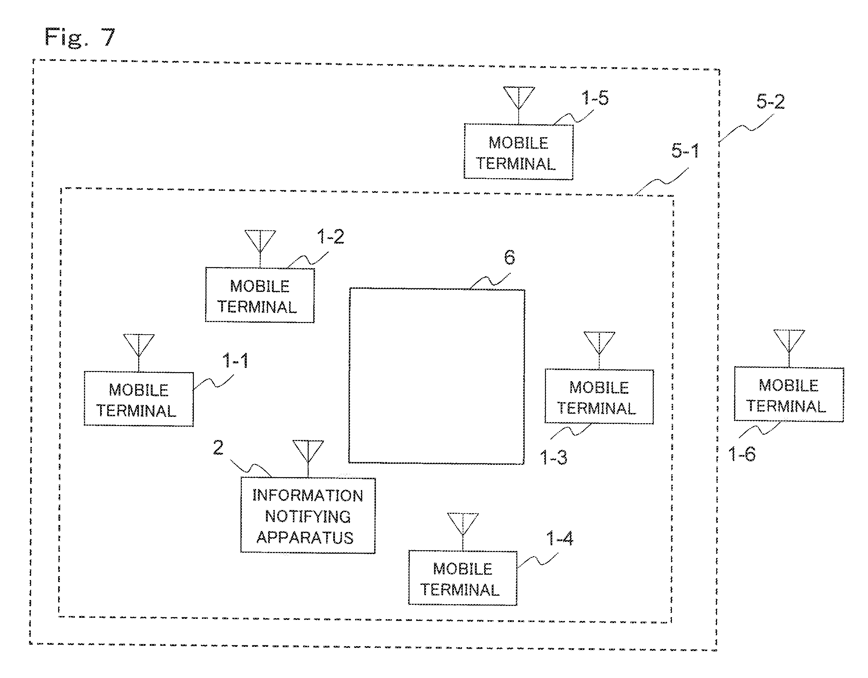

**Fig. 6** is a plan view showing an operation of the first exemplary embodiment of the present invention. **Fig. 7** is a plan view showing a modified example of the operation of the first exemplary embodiment of the present invention. The notification area **5** includes a dangerous area **6.** A distance between the periphery of the dangerous area 7**6** and the periphery of the notification area **5** may be fixed and may not be fixed. The information notifying apparatus **2** notify the mobile terminals **1-1, 1-2, 1-3** and **1-4,** which have entered the notification area **5,** not to approach the dangerous area **6**. The contents of notification are, for example, a voice message or an image display like "There is a dangerous point near here. Please be careful." or the like. A pattern of vibration and strength of the vibration may be specified on the basis of the degree of danger in order to identify the kind of messages by the vibration. Incidentally, the mobile terminals **1-5** and **1-6,** which exist outside the notification area **5,** are not notified.

As shown in **Fig. 7****,** the notification area **5** may be divided into a plurality of areas like notification areas **5-1** and **5-2** whose degree of danger is classified on the basis of the distance from the dangerous area **6** or the like. In this case, the notification to the mobile terminal **1-5** which exists in the outer side of the notification area **5-2,** and the notification to the mobile terminals **1-1**, **1-2, 1-3** and **1-4** which exist in the inner side of the notification area **5-1** have different contents each other. For example, the mobile terminal **1-5** is notified so as to output a message like "You are approaching a dangerous area. Please be careful." etc. Meanwhile, the mobile terminals **1-1**, **1-2**, **1-3** and **1-4** are notified so as to output a voice message or an image displaying message like "There is a dangerous point very closely. Please pay careful attention." In the case that the message is outputted through vibrating the mobile terminal, a pattern of the vibration and strength of the vibration on the basis of the degree of danger may be specified.

The mobile terminal **1** selects the kind of message, which is to be outputted, on the basis of information included in the notified information. In the case that the notified information includes the above-mentioned kind of messages, the mobile terminal **1** may output the message whose kind is specified by the notified information. In the case that the notified information includes the degree of danger, the mobile terminal **1** may output the message on the basis of the notified degree of danger. In the case that the notified information includes the distance of the mobile terminal **1** from the information notifying apparatus **2** or the dangerous area, the mobile terminal **1** may output the message on the basis of the notified distance.

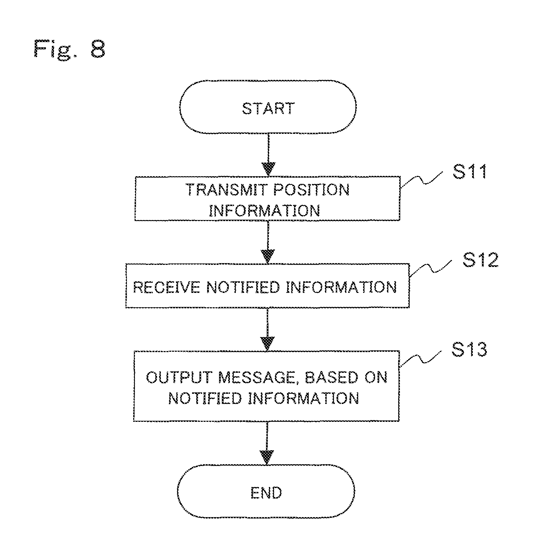

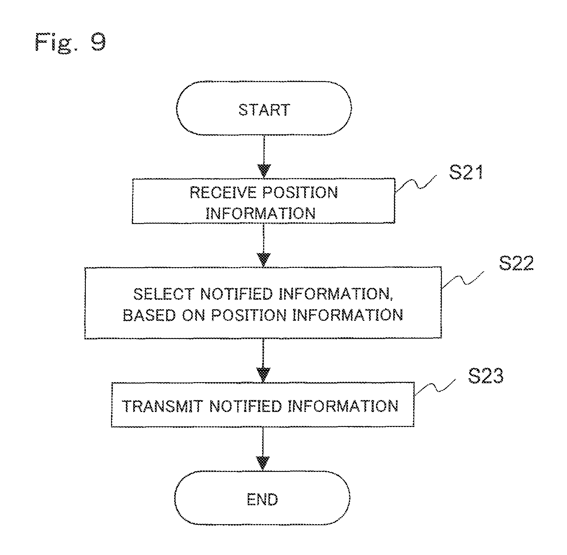

A processing by use of program, which is executed by a CPU (Central Processing Unit), can control a whole of terminal **1.** With regard to the information notifying apparatus **2,** the calculating unit **22** is realized by a program processing which is executed by a CPU. **Fig. 8** is a flowchart showing a processing of the terminal according to the first exemplary embodiment of the present invention. **Fig. 9** is a flowchart showing a processing of the calculating unit of the information notifying apparatus according to the first exemplary embodiment of the present invention.

At first, a processing for controlling the mobile terminal **1** by use of a CPU (not shown in the figure) will be described. First of all, the CPU transmits the terminal position information, which is obtained from the position information obtaining unit **11**, to the information notifying apparatus **2** (Step **S11**). Specifically, the CPU transfers the terminal position information to the position information transmitting unit **12** and directs the position information transmitting unit **12** to transmit the terminal position information to the information notifying apparatus **2.** Next, the CPU receives the notified information from the notified information receiving unit **13** (Step **S12**). Then, the CPU directs the message outputting unit **14** to output the message which is based on the notified information (Step **S13**).

Next, a processing for controlling the calculating unit **22** of the information notifying apparatus **2** by use of the CPU (not shown in the figure) will be described. First of all, the CPU receives the terminal position information from the position information receiving unit **21** (Step **S21**). Next, the CPU generates notified information on the basis of the terminal position information and transfers the notified information to the notified information transmitting unit **23** (Step **S22**). Then, the CPU directs the notified information transmitting unit **23** to transmit the notified information (Step **S23**).

Incidentally, the above-mentioned program may be stored in a computer-readable storage medium.

According to the information notifying system of the first exemplary embodiment of the present invention, the mobile terminal transmits the position information to the information notifying apparatus, as mentioned above. The information notifying apparatus generates the notified information on the basis of the received position information and then, transmits the notified information to the mobile terminal. The mobile terminal, which has received the notified information, outputs the message corresponding to the notified information. Accordingly, the present invention has an effect that the mobile terminal can receive the suitable notification which is based on the current position, for example, a notification of approaching to the dangerous point.

The mobile terminal has only to transmit the position information and to output the message which is based on the received notified-information. Accordingly, the present embodiment has another effect that the mobile terminal is not required to do a complicate processing.

### 2. Second Exemplary Embodiment

According to the information notifying system of the first exemplary embodiment of the present invention, the notification is carried out on the basis of the position of the mobile terminal. According to an information notifying system of the second exemplary embodiment of the present invention, the notification is carried out on the basis of both position and moving direction of the mobile terminal.

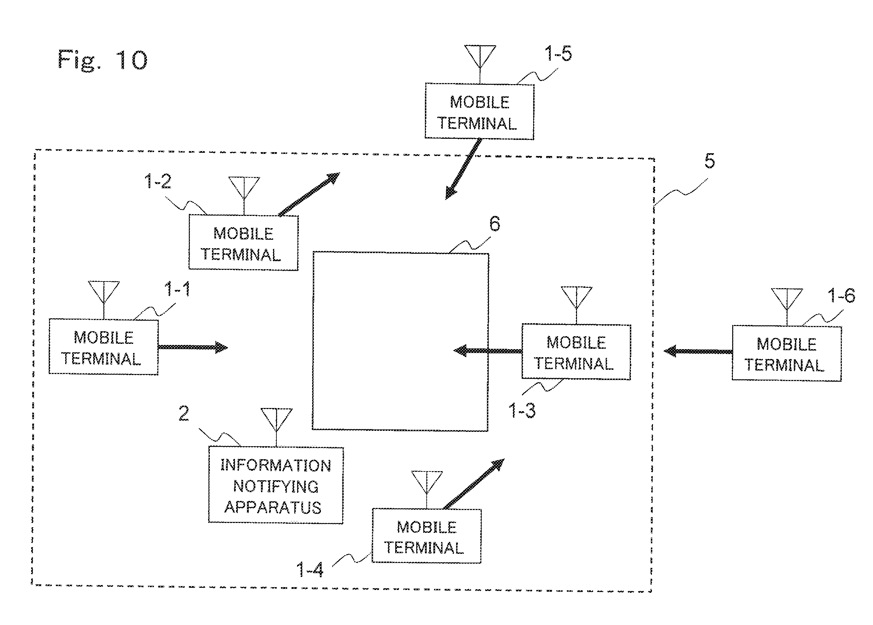

**Fig. 10** is a plan view showing an operation of the second exemplary embodiment of the present invention. The mobile terminals **1-1, 1-2, 1-3, 1-4, 1-5** and **1-6** exist at different positions each other and move in the different directions each other. The mobile terminals **1-1**, **1-2**, **1-3**, **1-4**, **1-5** and **1-6** have the same structure as the mobile terminals **1** of the first exemplary embodiment, shown in **Fig. 2****.** The information notifying apparatus **2** has the same structure as the information notifying apparatus **2** of the first exemplary embodiment shown in **Fig. 3**. In **Fig. 10****,** an arrow attached to each of the mobile terminals **1-1**, **1-2**, **1-3**, **1-4**, 1-5 and **1-6** indicates the moving direction of the mobile terminal.

In the case that a plurality of mobile terminals exist at different positions each other and move in the different directions each other, degree of danger and necessity of notification are different, dependently on a relative position of the mobile terminal to the position of the dangerous area **6** and a relative moving direction of the mobile terminal to the dangerous area **6.** For example, the mobile terminal **1-1** exists apart from the dangerous area **6** but the moving direction is the same as the direction to the dangerous area. Accordingly, the mobile terminal **1-1** has high degree of danger and high necessity of the notification. Meanwhile, the mobile terminal **1-3** exists near the dangerous area **6,** and the moving direction is also the same as the direction to the dangerous area **6.** Accordingly, the mobile terminal **1-3** has very high degree of danger and very high necessity of the notification. On the other hand, the mobile terminals **1-2** and **1-4** exist near the dangerous area **6** but the moving directions are not the same as the direction to the dangerous area **6.** Accordingly, the mobile terminals **1-2** and **1-4** have low degree of danger and low necessity of the notification. The mobile terminal which exists outside the notification area **5** is considered to have no danger and no necessity of the notification. Accordingly, the mobile terminals **1-5** and **1-6** are notified of nothing.

To cope with the above mentioned situation, the message which is outputted by the mobile terminal is selected according to the position and the moving direction of the mobile terminal. An example of the message based on a combination of the position of the mobile terminal and the moving direction of the mobile terminal will be shown in the following:
**1)** In the case that the mobile terminal is near the dangerous point and also moving direction of the mobile terminal is the same as the direction to the dangerous point (in the case of mobile terminal **1-3),**
   Voice output or image display like "A dangerous point is just in front of you. Please stop immediately." or "A dangerous point is just in front of you. Please change your moving direction.", or the strongest vibration;
**2)** In the case that the mobile terminal is far from the dangerous point but the moving direction of the mobile terminal is the same as the direction to the dangerous point (in the case of the mobile terminal **1-1),**
   Voice output or image display like "you are approaching a dangerous point. Please be careful." or "There is a dangerous point in front of you. Please change your moving direction.", or stronger vibration;
**3)** In the case that the mobile terminal is near the dangerous point but the moving direction of the mobile terminal is not the same as the direction to the dangerous point (in the case of the mobile terminals **1-2** and **1-4),**

Voice output or image display like "There is a dangerous point near here. Please do not change your moving direction." or "There is a dangerous point on the front and right side (left side).Please do not change your moving direction to the right (left).", or strong vibration.

In other case, a message, which is based on a combination of the position and the moving direction of the mobile terminal, may be determined appropriately through taking a practical aspect into consideration.

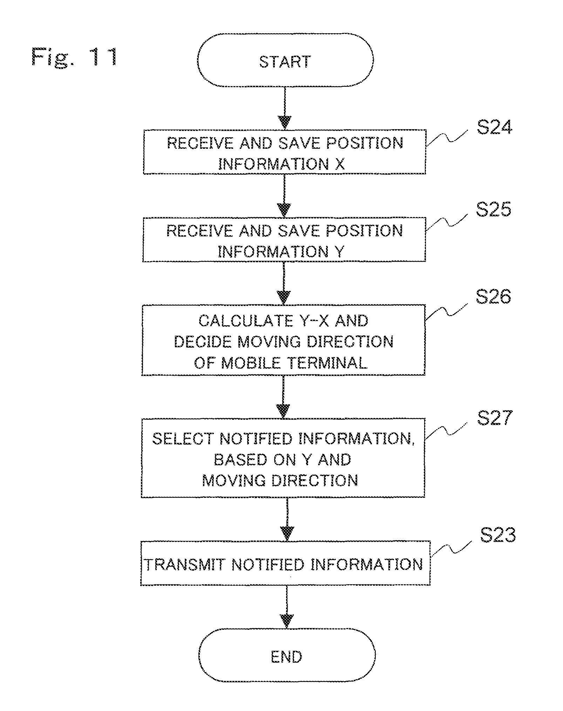

**Fig. 11** is a flowchart used at a time when a processing of the calculating unit of the information notifying apparatus is carried out by use of the program.

First, the CPU (not shown in the figure) of the calculating unit **22** of the information notifying apparatus **2** receives the terminal position information from the position information receiving unit **21** and then, stores the terminal position information as terminal position information X (Step **S24**). Afterward, the CPU receives the terminal position information from the position information receiving unit **21** again and stores the newly received terminal position information as terminal position information Y (Step **S25**). Next, the moving direction of the mobile terminal **1** is judged through subtracting X from Y (Step **S26**). Since the terminal position information X and Y, which are received at different points of time each other, are stored, the moving direction of the mobile terminal **1** is determined easily on the basis of temporal change between the terminal position information X and Y. The CPU judges the necessity of notification on the basis of the position and the moving direction of the mobile terminal **1,** and in the case that the notification is required, the CPU selects the contents of notification and transfers the notified information to the notified information transmitting unit **23** (Step **S27**). Then, the CPU directs the notified information transmitting unit **23** to transmit the notified information (Step **S23**).

Incidentally, the above-mentioned program may be stored in a computer-readable storage medium.

According to the second exemplary embodiment of the present invention, the notification is carried out on the basis of the position and the moving direction of the mobile terminal. The notification may be carried out on the basis of only the moving direction of the mobile terminal. For example, in the case that the mobile terminal is held by a blind person, a child or an aged people, the moving direction may be limited strictly to prevent surely that they approach the dangerous point in order to secure sufficient safety. In this case, it is effective that the notification is carried out on the basis of only the moving direction.

According to the second information notifying system, the notification to the mobile terminal is carried out on the basis of the position and the moving direction of the mobile terminal, as mentioned above. Therefore, the present embodiment has an effect that the notification is carried out on the basis of the degree of danger and the necessity of notification which change due to the position and the moving direction of the mobile terminal.

### 3. Third Exemplary Embodiment

According to the information notifying system of the second exemplary embodiment of the present invention, the notification is carried out on the basis of the position and the moving direction of the mobile terminal. According to an information notifying system of the third exemplary embodiment, the notification is carried out on the basis of moving speed of the mobile terminal in addition to the position and the moving direction of the mobile terminal.

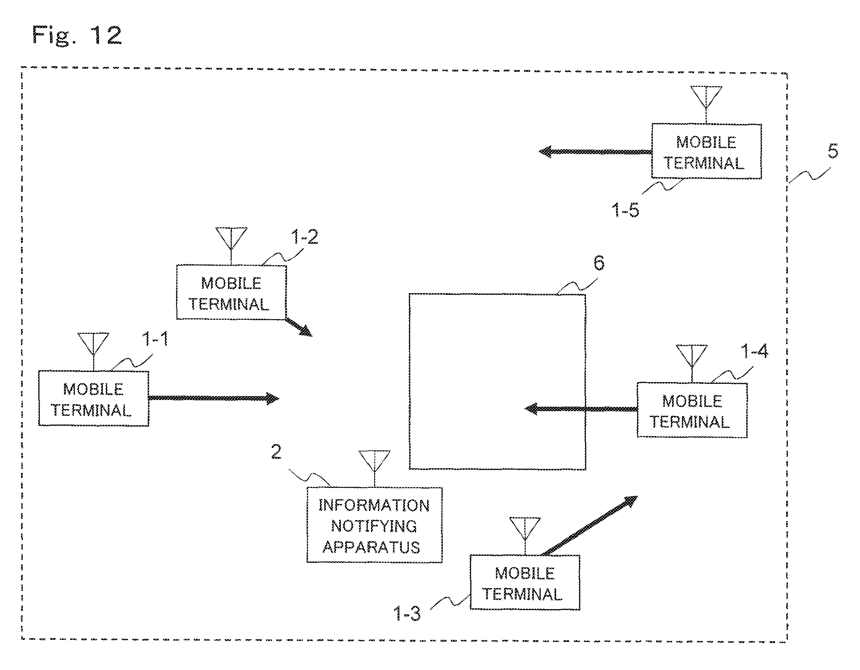

**Fig. 12** is a plan view showing an operation of the third exemplary embodiment of the present invention. Mobile terminals **1-1**, **1-2**, **1-3**, **1-4** and **1-5** exist at different positions each other and move in different directions at different speeds each other. The mobile terminals **1-1**, **1-2**, **1-3**, **1-4** and **1-5** have the same structure as the mobile terminals **1** of the first exemplary embodiment shown in **Fig**. **2****.** The information notifying apparatus **2** has the same structure as the information notifying apparatus **2** of the first exemplary embodiment shown in **Fig. 3**. In **Fig. 12****,** an arrow attached to each of the mobile terminals **1-1**, **1-2**, **1-3**, **1-4** and **1-5** indicates the moving direction, and length of the arrow indicates largeness of the moving speed.

In this case, the degree of danger and the necessity of notification are changed dependently on the relative position of the mobile terminal to the position of the dangerous area **6,** the moving direction of the mobile terminal and the moving speed of the mobile terminal. For example, the mobile terminal **1-1** is far from the dangerous area **6** but the moving direction is the same as the direction to the dangerous area, and moreover, the moving speed is high. Accordingly, the mobile terminal **1-1** has high degree of danger and high necessity of the notification. Meanwhile, the mobile terminal **1-4** is near the dangerous area **6,** and the moving direction is the same as the direction to the dangerous area, and moreover, the moving speed is high. Accordingly, the mobile terminal **1-4** has very high degree of danger and very high necessity of the notification. The mobile terminal **1-3** is near the dangerous area **6,** and the moving speed is high, but the moving direction is not the same as the direction to the dangerous area. Accordingly, the mobile terminal **1-3** has low degree of danger and low necessity of the notification. The mobile terminal **1-2** is near the dangerous area **6,** and the moving direction is the same as the direction to the dangerous area, but the moving speed is low. Accordingly, the mobile terminal **1-2** has a little bit low degree of danger and a little bit low necessity of the notification.

To cope with the above mentioned situation, the message which is outputted by the mobile terminal is selected on the basis of the position, the moving direction and the moving speed of the mobile terminal. An example of the message which is based on a combination of the position, the moving direction and the moving speed of the mobile terminal will be shown in the following:
**1)** In the case that the mobile terminal is near the dangerous point and the moving direction is the same as the direction to the dangerous point and the moving speed is high (in the case of mobile terminal **1-4),**
   Voice output or image display like "A dangerous point is in front of you. Please slow down or stop immediately or change your moving direction.", or the strongest vibration;
**2)** In the case that the mobile terminal is far from the dangerous point but the moving direction is the same as the direction to the dangerous point and the approaching speed is high (in the case of mobile **terminal 1-1),**
   Voice output or image display like "You are approaching to a dangerous point rapidly. Please slow down.", or stronger vibration;
**3)** In the case that the mobile terminal is near the dangerous point and the moving direction is the same as the direction to the dangerous point but the moving speed is low (in the case of mobile terminal **1-2),**
   Voice output or image display like "If you goes straight just as you are, you will reach a dangerous point soon. Please change your moving direction to the left.", or a little bit strong vibration;
**4)** In the case that the moving direction of the mobile terminal is not the same as the direction to the dangerous point (in the case of mobile terminals **1-3** and **1-5),**

Voice output or image display like "There is a dangerous point near here. Please do not change your directions," or the weakest vibration.

Also in other cases, a message which is based on a combination of the position, the moving direction and the moving speed of the mobile terminal may be set appropriately through taking a practical aspect into consideration.

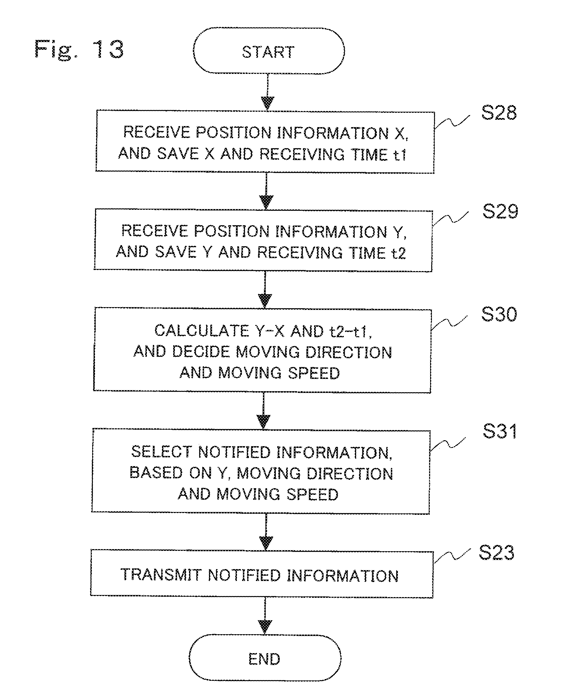

**Fig. 13** is a flowchart showing a processing of a calculating unit of an information notifying apparatus according to the third exemplary embodiment of the present invention.

First, the CPU (not shown in the figure) of the calculating unit **22** of the information notifying apparatus **2** receives the terminal position information from the position information receiving unit **21** and then, stores the terminal position information X and a time t**1** when the terminal position information is received (Step **S28**). Afterward, the CPU receives the terminal position information from the position information receiving unit **21** again and then, stores the newly received terminal position information Y and a time t**2** when the terminal position information Y is received newly (Step **S29**). Next, the moving direction and the moving speed of the mobile terminal **1** are determined through subtracting X from Y and subtracting t**1** from t**2** (Step **S30**). Since the terminal position information X and Y which are received at the different points of time t**1** and t**2** are stored respectively, the moving direction and the moving speed of the mobile terminal **1** are determined easily on the basis of change with respect to time between the terminal position information X and Y. The CPU decides necessity of the notification on the basis of the position, the moving direction and the moving speed of the mobile terminal **1,** and in the case that the notification is required, the CPU selects contents of the notification and transfers the notified information to the notified information transmitting unit **23** (Step **S31**). Then, the CPU directs the notified information transmitting unit **23** to transmit the notified information (Step **S23**).

According to the third exemplary embodiment of the present invention, the notification is carried out on the basis of the position, the moving direction and the moving speed of the mobile terminal. The notification may be carried out on the basis of only the moving speed. For example, in the case that the moving direction is restricted to one-dimensional direction like a moving direction on a road and a railroad track, the notification may be carried out on the basis of only the moving speed in order to lower the moving speed of the mobile terminal, that is, moving speed of a mobile object which holds the mobile terminal, with the highest priority.

According to the third information notifying system, the notification to the mobile terminal is carried out on the basis of the position, the moving direction and the moving speed of the mobile terminal, as mentioned above. Therefore, the present embodiment has an effect that the notification is carried out on the basis of the degree of danger and the necessity of notification which change due to the position, the moving direction and the moving speed of the mobile terminal.

### 4. Fourth Exemplary Embodiment

According to the first to the third exemplary embodiments of the present invention, it is assumed that the notification from the information notifying apparatus **2** is to make the mobile terminal not approach the dangerous point **6.** The present invention can be applied reversely to a form of usage to guide the mobile terminal to a predetermined object point by the notification from the information notifying apparatus **2.**

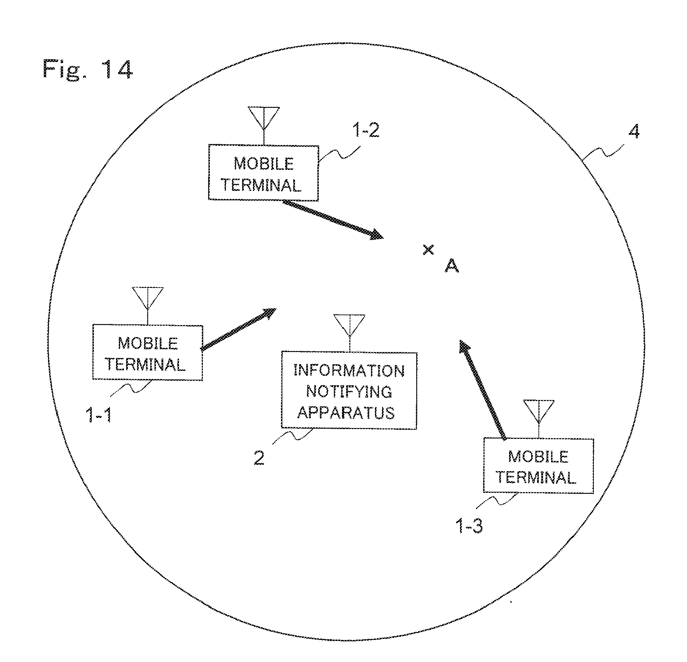

**Fig. 14** is a plan view showing an operation of the fourth exemplary embodiment of the present invention. The mobile terminals **1-1**, **1-2** and **1-3** exist at different positions each other. Then, through receiving the notified information from the information notifying apparatus **2**, each of mobile terminal **1-1**, **1-2** and **1-3** is guided. The mobile terminals **1-1**, **1-2** and **1-3** have the same structure as the mobile terminals **1** of the first exemplary embodiment shown in **Fig. 2****.** The information notifying apparatus **2** has the same structure as the information notifying apparatus **2** of the first exemplary embodiment shown in **Fig. 3****.**

An object point A is not always required to be the same as the point where the information notifying apparatus **2** is arranged, and the object point A may be positioned at an arbitrary position within the notification enabled area **4** where the notified information signal **24** can reach. However, the peripheral area of the notification enabled area **4** is near to an area where the notified information signal **24** can not reach. Therefore, it is desirable that the installation position of the information notifying apparatus **2** is decided so as to be adapted to the position of the object point A through taking an efficiency of the guide into consideration.

In the case that the mobile terminal **1** is guided, the notified information from the information notifying apparatus **2** to the mobile terminal **1** may include the following information:
**1)** The direction to the object point from the mobile terminal **1;**
**2)** The direction in which the mobile terminal **1** should go;
**3)** The distance between the mobile terminal **1** and the object point.

The notified information to the mobile terminal **1** for guiding the mobile terminal **1** may include any one of information out of **1)** and **2).** The mobile terminal of the information **2)** may be notified in order to carry out the effective guide. The information notifying apparatus **2** may have map information which includes arrangement of the surrounding road. While the information **3)** is not essential, the information **3)** may be transmitted, since the distance to the object point is useful information for user of the mobile terminal **1**.

By the way, according to the first to the third exemplary embodiments of the present invention, it is assumed that the information notifying apparatus **2** is fixed at the predetermined position. According to the fourth exemplary embodiment of the present invention, the information notifying **2** may be a mobile type apparatus. In this case, it is possible that the mobile terminal **1** is guided dependently on the notified information from the information notifying apparatus **2** so as to catch up the information notifying apparatus **2.** The above form of usage is very effective in the case that departure times of the mobile terminal **1** and the information notifying apparatus **2** are different each other and the mobile terminal **1** chases the preceding information notifying apparatus **2** so as to reach the same destination finally as that of the information notifying apparatus **2.**

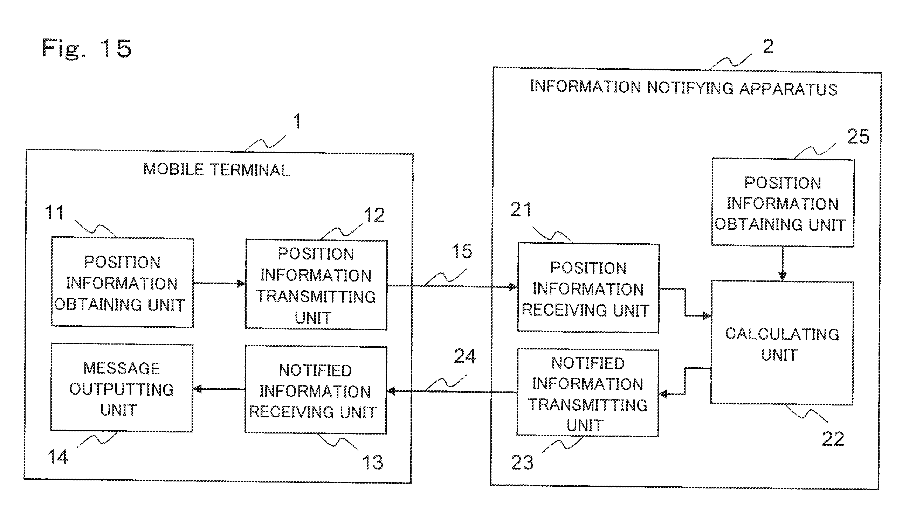

**Fig. 15** is a block diagram showing a configuration of an information notifying system in which the information notifying apparatus **2** is the mobile type apparatus, according to the fourth exemplary embodiment of the present invention. As mentioned above, it is necessary for the information notifying apparatus **2** also to have a position information obtaining unit **25.** Then, the calculating unit **22** calculates the direction and the distance to the information notifying apparatus **2** from the mobile terminal **1** by use of the position information of the mobile terminal **1** and the position information of the information notifying apparatus **2** and then, generates the notified information for guiding the mobile terminal **1**.

According to the information notifying system of the fourth exemplary embodiment of the present invention, the information notifying apparatus transmits the notified information, which includes the direction to the object point and the moving direction, on the basis of the position information of the mobile terminal, as mentioned above. Therefore, the present embodiment has an effect that the mobile terminal can be guided to the object, point efficiently.

### 5. Fifth Exemplary Embodiment

As shown in the fourth exemplary embodiment of the present invention, the information notifying apparatus **2** may be the mobile type apparatus. In this case, the present invention can be applied to not only the form of usage to guide the mobile terminal but also a game such as a kind of tag in which the mobile terminal chases the information notifying apparatus which is going to escape. According to the fifth exemplary embodiment of the present invention, the mobile terminals **1-1** and **1-2** of an information notifying system have the same structure as the mobile terminals **1** of the first exemplary embodiment shown in **Fig. 2****.** The configuration of the information notifying apparatus **2** is the same as one shown in **Fig. 15****.**

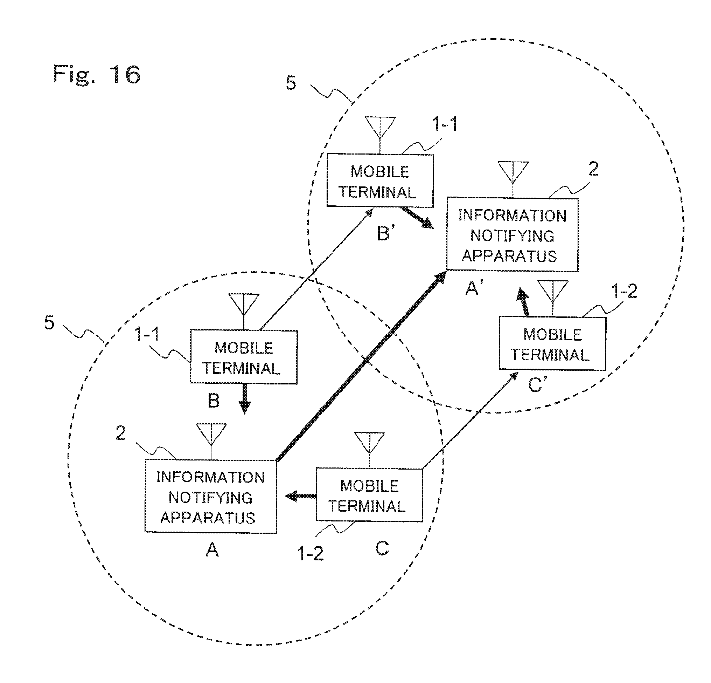

**Fig. 16** is a plan view showing an operation of the fifth exemplary embodiment of the present invention. As an initial state, the information notifying apparatus **2** is positioned at position A, and the mobile terminals **1-1** and **1-2** are positioned at position B and position C respectively. The information notifying apparatus **2** transmits always or intermittently a predetermined notification to the mobile terminals **1-1** and **1-2.** Contents of the notification will be described in the following. In the case that the information notifying apparatus **2** moves to the position B, the mobile terminals **1-1** and **1-2** chase the information notifying apparatus **2** on the basis of the notified information from the information notifying apparatus **2** and consequently, move to the positions B ' and C' respectively.

The information notifying apparatus may include the following information as the notified information which is transmitted to the mobile terminal **1**:
**1)** The direction to the information notifying apparatus **2** from the mobile terminal **1;**
**2)** The distance between the mobile terminal **1** and the information notifying apparatus **2.**

Any one out of **1)** and **2)** may be notified in order to improve an effect as the game. Furthermore, none of notification may be carried out if the distance between the mobile terminal **1** and the information notifying apparatus **2** becomes shorter than a predetermined distance.

According to the information notifying system of the fifth exemplary embodiment of the present invention, the information notifying apparatus transmits the notified information, which includes the direction of the information notifying apparatus and the distance between the mobile terminal and the information notifying apparatus, on the basis of the position information of the mobile terminal, as mentioned above. Therefore, the present embodiment has an effect that the information notifying system can be applied to the game or the like in which the mobile terminal chases the information notifying apparatus.

### 6. Sixth Exemplary Embodiment

In the case that the mobile terminal **1** exists in an area where the mobile terminal has no necessity to receive the notified information from the information notifying apparatus **2**, it is not necessary for the mobile terminal **1** to transmit the position information. Then, it is possible to reduce power consumption of the mobile terminal **1** through the mobile terminal **1** transmitting the position information only if necessary. According to an information notifying system of the sixth exemplary embodiment of the present invention, the mobile terminal transmits the position information only when the mobile terminal receives a predetermined request signal from the information notifying apparatus.

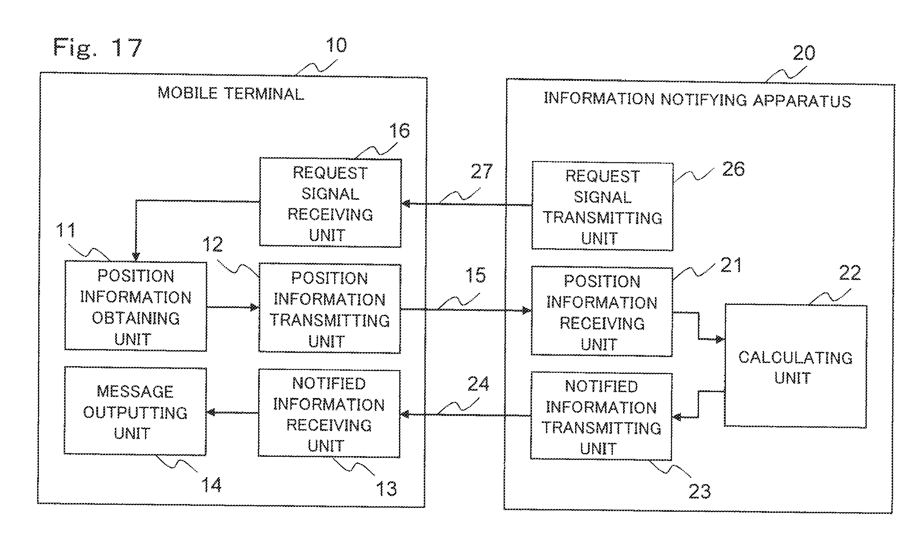

**Fig. 17** is a block diagram showing a configuration of the information notifying system according to the sixth exemplary embodiment of the present invention.

According to the sixth exemplary embodiment of the present invention, the information notifying system includes a mobile terminal **10** and an information notifying apparatus **20.** The mobile terminal **10** further includes a request signal receiving unit **16** in addition to the components of the mobile terminal **1** described in the first to the fifth exemplary embodiments of the present invention. The information notifying apparatus **20** further includes a request signal transmitting unit **26** in addition to the components of the information notifying apparatus **2** described in the first to the fifth exemplary embodiments of the present invention.

The request signal transmitting unit **26** transmits a request signal **27** in order to request the mobile terminal **10** to transmit the position information. The request signal transmitting unit **26** may transmit the request signal **27** continuously. Or, the request signal transmitting unit **26** may transmit the request signal **27** at a predetermined time interval. However, the information notifying apparatus **20** receives the position information of the mobile terminal **10** with delay, in the case that the time interval for transmitting the request signal **27** is extremely long. Therefore, there is a possibility to cause a situation that the transmission of the notified information signal **24** to the mobile terminal **10** is delayed. Accordingly, it is desirable that the time interval for transmitting the request signal **27** is set to an appropriate time interval through taking a practical aspect into consideration.

A plurality of mobile terminals including the mobile terminal **10** may be able to receive the request signal **27.** Or, the request signal **27** may include identification information which designates the mobile terminal **10.** In this case, it is possible to control the time interval for transmitting the request signal **27** on the basis of the position of the mobile terminal **10,** the distance between the mobile terminal **10** and the information notifying apparatus **20,** the moving direction of the mobile terminal **10**, the moving speed of the mobile terminal **10,** or the like. It is possible to reduce the power consumption of the mobile terminal **10** more efficiently with the control method. For example, in the case that an area which is near to the object point or in which the road is complicate, the time interval for transmitting the position information may be short. Or, in the case of high speed, the time interval for transmitting the position information may be short.

The notified information transmitting unit **23** may also serves as the request signal transmitting unit **26.** The request signal **27** may be transmitted with the same signal strength as that of the notified information signal **24.** In this case, the mobile terminal **10** transmits the position information every time when the mobile terminal **10** exists in an area where the mobile terminal **10** can receive necessary notification by receiving the notified information signal **24.** Accordingly, it is possible that the information notifying apparatus **20** transmits surely the notified information to the mobile terminal **10,** when the information notifying apparatus **20** judges that it is necessary to transmit the notified information, on the basis of the received position information.

In the case that the mobile terminal **10** receives the request signal **27,** the mobile terminal **10** directs the position information obtaining unit **11** to measure current information. When the position information obtaining unit **11** completes the measurement of the current position, the position information obtaining unit **11** transmits the position information to the position information transmitting unit **12.** Then, the position information transmitting unit **12** transmits the position information as the position information signal **15**.

Incidentally, the mobile terminal **10** may transmit the position information every time when the mobile terminal **10** receives the request signal **27.** Or, after the mobile terminal **10** receives the request signal **27** once, the mobile terminal **10** may continue to transmit the position information for a predetermined period of time. As a matter of course, it is not necessary that the mobile terminal **10** continues always to transmit the signal, and the mobile terminal **10** may transmit, the position information at a predetermined time interval which is determined in consideration of the moving speed of the mobile terminal **1.**

On the other hand, if the request signal **27** has not received any more for a predetermined period of time, the mobile terminal **10** may stop the transmission of the position information signal **15**.

By the way, the position information signal **15** may be transmitted only when the transmission is necessary, for example when the request signal **27** is received. Accordingly, the measurement of the position is carried out independently of the transmission of the position information signal **15.** That is, the measurement of the position may be carried out always and the measurement may be carried out for other purpose except for the transmission of the position information signal **25.** In this case, it is possible to reduce only the latter power consumption out of power consumption required for the measurement of the position and power consumption required for transmitting the position information signal **25.**

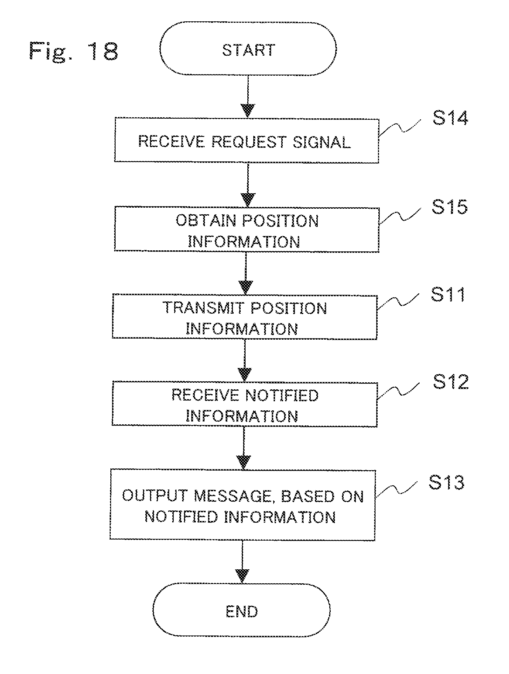

A processing by use of program, which is executed by the CPU (not shown in the figure), can control a whole of the mobile terminal **10,** similarly to the first exemplary embodiment of the present invention. **Fig. 18** is a flowchart used at a time when a processing of the terminal is carried out by use of the program, according to the sixth exemplary embodiment of the present invention. The flowchart shown in **Fig. 18** has a step (**S14**) in which the request signal **27** is received and a step (**S15**) in which the position information is measured, in addition to the flowchart shown in **Fig. 8**. Receiving the request signal **27** and measuring the position information are carried out similarly to the above mention. Incidentally, the above-mentioned program may be stored in a computer-readable storage medium.

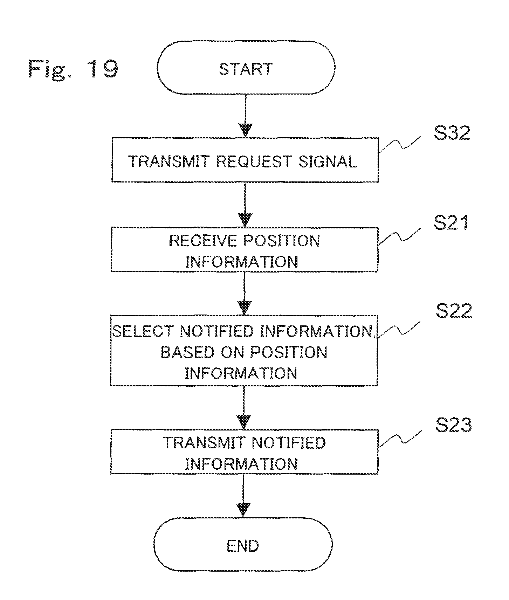

As shown in Fig. **19**, it is possible to control the calculating unit **22** of the information notifying apparatus **2** by use of the CPU (not shown in the figure), similarly to the first exemplary embodiment of the present invention. **Fig. 19** is a flowchart used at a time when a processing of the calculating unit of the information notifying apparatus is carried out by use of the program, according to the sixth exemplary embodiment of the present invention. The flowchart shown in **Fig. 19** has a step **(S32),** in which the request signal **27** is transmitted, in addition to the flowchart shown in **Fig. 9****.** Transmitting the request signal **27** is carried out similarly to the above mention. Incidentally, the above-mentioned program may be stored in a computer-readable storage medium.

According to the information notifying system of the sixth exemplary embodiment of the present invention, the mobile terminal transmits the position information only when the transmission is required. Therefore, the present invention has an effect that it is possible to reduce power consumption required for transmitting the position information and also to reduce power consumption required for measuring the position in some cases. Since the mobile terminal is usually driven by a battery, a practical effect obtained by the reduction of power consumption is very significant.

Incidentally, the first to the sixth exemplary embodiments of the present invention can be combined with the other exemplary embodiment respectively.

The information notifying system of the present invention can be applied to the form of usage to carry out the notification in order to prevent approaching to the predetermined point such as the dangerous point described in the exemplary embodiment of the present invention. Reversely, the information notifying system can also be applied to the system to guide the mobile terminal to the predetermined point or to chase the information notifying apparatus which is moving.

Each of arts described in the patent documents has a problem. According to the road crossing supporting apparatus described in the **patent document 1**, the notification is carried out on the basis of existence of a received radio signal which is transmitted from a transmitting apparatus held by the blind person. Generally, reach of the radio signal such as a radio wave and light is influenced severely by arrangement of a surrounding building, a wall or the like, and by existence of the radio wave and the light which have the same frequency or the like. Therefore, it is impossible to set precisely a reference distance for judging that the transmitting apparatus is approaching. Therefore, there is a possibility that, for example, in the case that the reach of the radio signal is short, the warning to the blind person may be delayed. Moreover, there is a possibility that in the case that the reach of the radio signal is long reversely, the warning may be issued though the warning is unnecessary to be issued because of being far from the dangerous point. In this case, the blind person is obliged to be under unnecessary tension. Accordingly, it is desirable that the reference distance for judging that the transmitting apparatus is approaching is determined as precisely as possible.

Moreover, according to the road crossing supporting apparatus described in the **patent document 1,** the notification is carried out on the basis of only existence of the received radio signal. Therefore, the notification is carried out not on the basis of the distance between user and the road, which is the dangerous point, but on the basis of the distance between the user and the road crossing supporting apparatus. Accordingly, it is impossible to take the degree of danger and the degree of emergency, which change dependently on the relative position of user to the position of the road, into consideration.

According to the action managing system described in the **patent document 2**, it is notified to user, who carries the mobile navigation apparatus, only that the user is approaching or enters the predetermined area. However, the necessity of notification may not be always constant over all areas inside the predetermined area. Therefore, there is a possibility that the notification is carried out though it is unnecessary for the immediate notification to be carried out dependently on the current position of user even if the user is approaching a certain area. For example, in the case that the action managing system described in the **patent document 2** is applied to the form of usage to transmit the warning so that user does not approach the predetermined area including the dangerous point, there is a possibility that the warning is issued immediately even when the current position of the user is far from the dangerous point to some extent.

Accordingly, in order to issue the warning certainly only at a required time, a method to limit an area, in which a judgment that it is unnecessary to issue the warning is made, to a small area is also considered to be applicable to the action managing system described in the **patent document 2**. However, it is not preferable to limit the area extremely, since the limit causes a delay in issuing the warning.

The warning described in the **patent document 3** is issued not to the train but to the surroundings of the train approach alarming system. Accordingly, it is impossible to notify the train of the danger, since the warning does not reach the train.

As mentioned above, each of the arts disclosed in the **patent document**s **1**, **2** and **3** has a problem that it is impossible to carry out the appropriate notification to user, who is a mobile object, on the basis of the current position of user.

The information notifying apparatus, the information notifying system, the information notifying method, and the information notifying control program according to the present invention generate the notified information on the basis of the position information transmitted from the mobile apparatus and transmit the notified information. Accordingly, the present invention has an effect that the appropriate notification can be carried out on the basis of the current position of the mobile apparatus.

Moreover, the mobile apparatus, the message outputting method, and the mobile apparatus control program transmits the position information, and receive the notified information which is generated on the basis of the position information, and output the predetermined message. Accordingly, the present invention has an effect that it is possible to output the appropriate message on the basis of the current position of the mobile apparatus.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Further, it is the inventor's intention to retain all equivalents of the claimed invention even if the claims are amended during prosecution.

### (Further exemplary embodiment 1)

An information notifying apparatus comprising: a first position information obtaining unit obtaining a first position information indicating a first current position of a mobile apparatus from the mobile apparatus; a calculating unit generating notified information corresponding to the first position based on the first position information; and an information transmitting unit transmitting the notified information to the mobile apparatus.

### (Further exemplary embodiment 2)

The information notifying apparatus according to further exemplary embodiment 1, wherein the calculating unit calculates a distance between the mobile apparatus and a point based on the first position information, and generates the notified information based on the distance.

### (Further exemplary embodiment 3)

The information notifying apparatus according to further exemplary embodiment 1 or 2, wherein the calculating unit calculates a moving speed of the mobile apparatus based on the first position information, and generates the notified information based on the moving speed.

### (Further exemplary embodiment 4)

The information notifying apparatus according to any one of further exemplary embodiments 1-3, wherein the notified information includes information indicating a direction of a target point viewed from the mobile apparatus.

### (Further exemplary embodiment 5)

The information notifying apparatus according to any one of further exemplary embodiments 1-3, wherein the notified information includes information indicating a distance between the mobile apparatus and a target point.

### (Further exemplary embodiment 6)

The information notifying apparatus according to any one of further exemplary embodiments 1-3, wherein the notified information includes information indicating a moving direction in which the mobile apparatus is directed to move,

### (Further exemplary embodiment 7)

The information notifying apparatus according to any one of further exemplary embodiments 2-6, wherein the point is a current position of the information notifying apparatus.

### (Further exemplary embodiment 8)

The information notifying apparatus according to any one of further exemplary embodiments 1-7, further comprising: a second position information obtaining unit obtaining a second position information indicating a second current position of the information notifying apparatus, wherein the calculating unit generates the notified information based on the first position information and the second position information.

### (Further exemplary embodiment 9)

The information notifying apparatus according to any one of further exemplary embodiments 1-8, further comprising; a request signal, transmitting unit transmitting a request signal which requests the mobile apparatus to send the first position information.

### (Further exemplary embodiment 10)

The information notifying apparatus according to any one of further exemplary embodiments 1-9, wherein the notified information is information directing the mobile apparatus to output a predetermined message.

### (Further exemplary embodiment 11)

The information notifying apparatus according to further exemplary embodiment 10, wherein the notified information is information directing the mobile apparatus to output a predetermined audio message.

### (Further exemplary embodiment 12)

The information notifying apparatus according to further exemplary embodiment 10, wherein the notified information is information directing the mobile apparatus to output a predetermined displayed message.

### (Further exemplary embodiment 13)

The information notifying apparatus according to further exemplary embodiment 10, wherein the notified information is information directing the mobile apparatus to output a predetermined vibrating message of a strength based on the notified information or a pattern based on the notified information.

### (Further exemplary embodiment 14)

A mobile apparatus comprising: a first position information obtaining unit obtaining a first position information indicating a first current position; a position information transmitting unit transmitting the first position information to an external apparatus; a notified information receiving unit receiving notified information generated by the external apparatus based on the first position information; and a message outputting unit outputting a predetermined message based on the received notified information.

### (Further exemplary embodiment 15)

The mobile apparatus according to further exemplary embodiment 14, further comprising: a request signal receiving unit receiving a request signal which is transmitted by the external apparatus and requests the mobile apparatus to send the first position information, wherein the position information transmitting unit transmits the first position information to the external apparatus according to the request signal.

### (Further exemplary embodiment 16)

The mobile apparatus according to further exemplary embodiment 15, wherein the first position information obtaining unit obtains the first position information according to the request signal, and the position information transmitting unit transmits the first position information to the external apparatus.

### (Further exemplary embodiment 17)

An information notifying system comprising: a mobile apparatus comprising: a first position information obtaining unit obtaining a first position information indicating a first current position; a position information transmitting unit transmitting a first position information indicating a current position of the mobile apparatus; a notified information receiving unit receiving notified information; and a message outputting unit outputting a predetermined message based on the notified information; and an information notifying apparatus comprising: a first position information receiving unit receiving the first position information; a calculating unit generating the notified information corresponding to the first position based on the first position information; and an information transmitting unit transmitting the notified information.

### (Further exemplary embodiment 18)

An information notifying method comprising: obtaining a first position information indicating a first current position of a mobile apparatus from the mobile apparatus; generating notified information corresponding to the first position based on the first position information; and transmitting the notified information to the mobile apparatus.

### (Further exemplary embodiment 19)

A message outputting method comprising: obtaining a first position information indicating a first current position; transmitting the first position information to an external apparatus; receiving notified information generated by the external apparatus based on the first position information; and outputting a predetermined message based on the received notified information.

### (Further exemplary embodiment 20)

An information notification control program adopted in an information notifying apparatus which includes a first position information obtaining unit, a calculating unit and an information transmitting unit, for controlling the operations of: obtaining a first position information indicating a first current position of a mobile apparatus from the mobile apparatus with the first position information obtaining unit; generating notified information corresponding to the first position based on the first position information with the calculating unit; and transmitting the notified information to the mobile apparatus with the information transmitting unit.

### (Further exemplary embodiment 21)

A message output control program adopted in a mobile apparatus which includes a first position information obtaining unit, a position information transmitting unit, a notified information receiving unit and a message outputting unit, for controlling the operations of: obtaining a first position information indicating a first current position with the first position information obtaining unit; transmitting the first position information to an external apparatus with the position information transmitting unit; receiving notified information generated by the external apparatus based on the first position information received by the external apparatus with the notified information receiving unit; and outputting a predetermined message based on the received notified information with the message outputting unit.

### (Further exemplary embodiment 22)

A medium storing the program according to further exemplary embodiment 20.

### (Further exemplary embodiment 23)

A medium storing the program according to further exemplary embodiment 21.

## Claims

1. An information notifying apparatus comprising:
a first position information obtaining means for obtaining a first position information indicating a first current position of a mobile apparatus from the mobile apparatus;
a calculating means for generating notified information corresponding to the first position based on the first position information; and
an information transmitting means for transmitting the notified information to the mobile apparatus.

2. The information notifying apparatus according to claim 1, wherein
the calculating means calculates a distance between the mobile apparatus and a point based on the first position information, and generates the notified information based on the distance.

3. The information notifying apparatus according to claim 1 or 2, wherein
the calculating means calculates a moving speed of the mobile apparatus based on the first position information, and generates the notified information based on the moving speed.

4. The information notifying apparatus according to any one of claims 1-3, wherein
the notified information includes information indicating a direction of a target point viewed from the mobile apparatus, and/or
wherein the notified information includes information indicating a distance between the mobile apparatus and a target point, and/or
wherein the notified information includes information indicating a moving direction in which the mobile apparatus is directed to move.

5. The information notifying apparatus according to any one of claims 2-4, wherein
the point is a current position of the information notifying apparatus.

6. The information notifying apparatus according to any one of claims 1-5, further comprising:
a second position information obtaining means for obtaining a second position information indicating a second current position of the information notifying apparatus,
wherein
the calculating means generates the notified information based on the first position information and the second position information.

7. The information notifying apparatus according to any one of claims 1-6, further comprising:
a request signal transmitting means for transmitting a request signal which requests the mobile apparatus to send the first position information.

8. The information notifying apparatus according to any one of claims 1-7, wherein
the notified information is information directing the mobile apparatus to output a predetermined message.

9. The information notifying apparatus according to claim 8, wherein
the notified information is information directing the mobile apparatus to output a predetermined audio message, and/or wherein the notified information is information directing the mobile apparatus to output a predetermined displayed message, and/or wherein the notified information is information directing the mobile apparatus to output a predetermined vibrating message of a strength based on the notified information or a pattern based on the notified information.

10. A mobile apparatus comprising:
a first position information obtaining means for obtaining a first position information indicating a first current position;
a position information transmitting means for transmitting the first position information to an external apparatus;
a notified information receiving means for receiving notified information generated by the external apparatus based on the first position information; and
a message outputting means for outputting a predetermined message based on the received notified information.

11. The mobile apparatus according to claim 10, further comprising:
a request signal receiving means for receiving a request signal which is transmitted by the external apparatus and requests the mobile apparatus to send the first position information,
wherein the position information transmitting means transmits the first position information to the external apparatus according to the request signal.

12. An information notifying system comprising:
a mobile apparatus comprising:
a first position information obtaining means for obtaining a first position information indicating a first current position;
a position information transmitting means for transmitting a first position information indicating a current position of the mobile apparatus;
a notified information receiving means for receiving notified information; and
a message outputting means for outputting a predetermined message based on the notified information; and
an information notifying apparatus comprising:
a first position information receiving means for receiving the first position information;
a calculating means for generating the notified information corresponding to the first position based on the first position information; and
an information transmitting means for transmitting the notified information.

13. An information notifying method comprising:
obtaining a first position information indicating a first current position of a mobile apparatus from the mobile apparatus;
generating notified information corresponding to the first position based on the first position information; and
transmitting the notified information to the mobile apparatus.

14. A message outputting method comprising:
obtaining a first position information indicating a first current position;
transmitting the first position information to an external apparatus;
receiving notified information generated by the external apparatus based on the first position information; and
outputting a predetermined message based on the received notified information.

15. A computer program comprising computer program code which when being executed on a computer enables said computer to carry out a method according to one of claims 13 or 14 or to act as an apparatus according to one of claims 1 to 12,
